# EUROPEAN PATENT SPECIFICATION

(11) **EP 4 015 394 B1**
(45) Date of publication and mention of the grant of the patent: **16.04.2025**
(21) Application number: 21216124.4
(22) Date of filing: 20.12.2021
(51) Int. Cl.: B64D 29/06, E05C 19/14

(54) **ADJUSTABLE HOOK LATCH HAVING EFFICIENT LOAD PATH**
VERSTELLBARER HAKENVERSCHLUSS MIT EFFIZIENTER LASTSTRECKE
VERROU À CROCHET RÉGLABLE DOTÉ D'UN PARCOURS DE CHARGE EFFICACE

(30) Priority: 21.12.2020 US 202017129557
(43) Date of publication of application: 22.06.2022
(73) Proprietor: Rohr, Inc., Chula Vista, CA 91910-2098 (US)
(72) Inventor: McMAHAN, Paul, Chula Vista, 91910 (US); LIPSON, David L., Chula Vista, 91921 (US); SALAZAR, Jamie, 21600 Baja California (MX); AGUILAR, Jose, 21020 Baja California (MX); KANADE, Samir, Chula Vista, 91910 (US); ALMARAZ, Hugo, San Juan Capistrano, 92675 (US); HEDGES, Nicholas, Carlsbad, 92011 (US); MICALLEF, Steven, Chula Vista, 91910 (US); SANCHEZ, FERNANDA, 21280 Baja California (MX)
(74) Representative: Dehns

(56) References cited:
- EP-A1- 3 712 073
- WO-A1-2018/053387
- WO-A1-2020/159920

## Description

### FIELD

The present disclosure (invention) relates generally to latch mechanisms and, more particularly, to aircraft latch mechanisms exhibiting efficient load paths.

### BACKGROUND

Various latching mechanisms exist for use in aircraft as aircraft have many components, such as fuselage panels, including cowlings and the like, which must be opened and closed securely. For example, tension latches mounted on a first panel are typically configured to cinch to a keeper on a second panel to hold the first panel, which may be a moveable panel, closed relative to the second panel. Other latches include sliding toggle linkages to minimize the kinematic envelope of the latch. These linkages rotate around a mounting pin to produce the latch reach. The complexity of certain aircraft latches makes them relatively large and heavy, which is disfavored in aircraft. Accordingly, it is desirable to provide a latch having a reduced size and weight, but that exhibits the strength of larger and heavier latches.

WO 2020/159920 discloses a clevis-sensing adjustable hook latch.

### SUMMARY

According to an aspect of the present invention, there is provided a hook body for a latch mechanism in accordance with claim 1.

Optionally, a forward upper plate is positioned between and connects the first upper longitudinal beam and the second upper longitudinal beam to the hook body load bearing plate.

Optionally, the forward upper plate extends in the longitudinal direction and lies in an upper plane that is orthogonal to the hook body load bearing plate.

Optionally, the plurality of longitudinal members includes a first lower longitudinal beam, the first lower longitudinal beam connected to the first aft flange.

Optionally, the plurality of longitudinal members includes a second lower longitudinal beam, the second lower longitudinal beam connected to the second aft flange.

Optionally, a forward lower plate is positioned between and connects the first lower longitudinal beam and the second lower longitudinal beam to the hook body load bearing plate.

Optionally, the forward lower plate extends in the longitudinal direction and lies in a lower plane that is orthogonal to the hook body load bearing plate.

Optionally, the plurality of longitudinal members includes an upper longitudinal beam and a lower longitudinal beam, the upper longitudinal beam and the lower longitudinal beam connected to an aft flange and defining an axial cutout extending longitudinally between the hook body load bearing plate and the aft flange.

Optionally, a forward upper plate is positioned between and connects the upper longitudinal beam to the hook body load bearing plate and a forward lower plate is positioned between and connects the lower longitudinal beam to the hook body load bearing plate.

Optionally, the axial cutout is configured to receive a pin, and enable the hook body to slide in the longitudinal direction with respect to the pin.

According to another aspect of the present invention, there is provided a latch mechanism in accordance with claim 11.

Optionally, the second upper longitudinal beam and the second lower longitudinal beam connected to the second aft flange define a second axial cutout extending longitudinally between the hook body load bearing plate and the second aft flange.

These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B provide schematic illustrations of an aircraft having and aircraft propulsion system, in accordance with various embodiments;
FIG. 2 provides a schematic illustration of a latch mechanism, in accordance with various embodiments;
FIGS. 3A and 3B provide side and overhead schematic illustrations of a hook body, in accordance with various embodiments;
FIG. 3C provides a perspective schematic illustration of a latch mechanism, in accordance with various embodiments;
FIGS. 4A and 4B provide side and overhead schematic illustrations of a hook body, in accordance with various embodiments;
FIG. 4C provides a perspective schematic illustration of a latch mechanism, in accordance with various embodiments; and
FIGS. 5A and 5B provide schematic illustrations of a latch mechanism, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural.

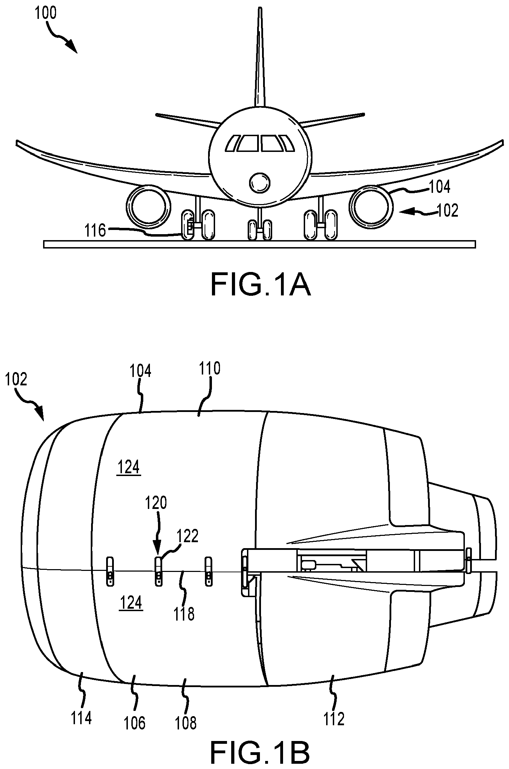

Referring now to the drawings, FIGS. 1A and 1B provide schematic illustrations of an aircraft 100 having and an aircraft propulsion system 102, in accordance with various embodiments. The aircraft propulsion system 102 may include various systems, such as, for example, a gas turbine engine system housed within a nacelle 104. The nacelle 104 typically comprises a plurality of aerodynamic panels, such as, for example, one or more core cowl panels 106 (*e.g.,* a first core cowl panel 108 and a second core cowl panel 110), one or more thrust reverser panels 112 and one or more fan cowl panels 114, each of which may be removable, hinged, or otherwise configurable to enable access to internal components of the aircraft 100 or the aircraft propulsion system 102. The aircraft 100 may also include various additional systems, such as, for example, one or more landing gear 116, which generally support the aircraft 100 when the aircraft 100 is not flying, allowing the aircraft 100 to taxi, takeoff or land without damage.

In various embodiments and with additional reference to the nacelle 104 illustrated in FIG. 1B, the first core cowl panel 108 and the second core cowl panel 110 are coupled, in various embodiments, along a seam 118 by a latch mechanism 120 (or a plurality of latch mechanisms). In the latched state, a latch handle 122 of the latch mechanism 120 may sit relatively flush or may be recessed within an aerodynamic panel surface 124 defined by the first core cowl panel 108 and the second core cowl panel 110. In the unlatched state, the latch handle 122 of the latch mechanism 120 may protrude above or outside of the aerodynamic panel surface 124. While the foregoing description of the latch mechanism 120 is presented with reference to the first core cowl panel 108 and the second core cowl panel 110, a similar description may be provided with reference to other panel assemblies of the aircraft 100 or the aircraft propulsion system 102, including, for example, the one or more thrust reverser panels 112 and the one or more fan cowl panels 114.

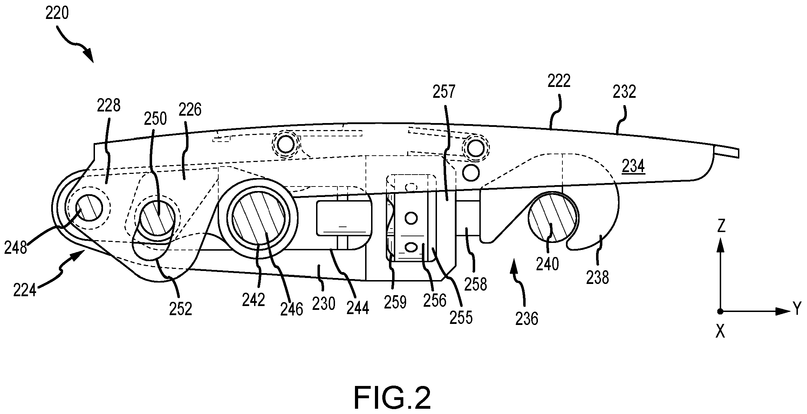

Referring now to FIG. 2, a latch mechanism 220 (*e.g.,* a latch mechanism for an aircraft panel), similar to the latch mechanism 120 described above with reference to FIG. 1B, is illustrated and its operation described. The latch mechanism 220 comprises a latch handle 222 coupled to a latch linkage 224 and a hook body 230. In various embodiments, the latch linkage 224 includes a first link 226 (or a forward link) and a second link 228 (or an aft link). The latch handle 222 includes an upper surface 232 extending between a first face 234 and a second face (opposite the first face 234) to define, in cross section through the ZX-plane, a relatively U-shaped latch handle. The latch mechanism 220 also includes a hook mechanism 236, including a hook 238 adjustably coupled (*i.e.,* in the Y-direction or a longitudinal direction) to the hook body 230, configured to removably couple with a mating pin 240 coupled to a cowl panel, such as, for example, the first core cowl panel 108 (or the second core cowl panel 110) described above. The first link 226 is configured to pivot about an axle 242 and to slide in an axial direction (*i.e.,* in the Y-direction) with respect to an axial cutout 244 of the hook body 230. The axle 242 extends through the axial cutout 244 and is typically connected to a cowl panel, such as, for example, the second core cowl panel 110 described above, via a first pin 246 (or a forward pin) that extends through the axle 242. The second link 228 is pivotally connected to the latch handle 222 and to the hook body 230 via a second pin 248 (or an aft pin), while both the first link 226 and the second link 228 are pivotally connected to each other via a third pin 250.

In operation, (*e.g.*, when decoupling the first core cowl panel 108 and the second core cowl panel 110), the latch handle 222 is rotated about the second pin 248 and away from the hook body 230, causing the first link 226 and the second link 228 to articulate with respect to each other about the third pin 250. The mutual articulation about the third pin 250, caused by engagement of a channel 252 cut into the latch handle 222 with the third pin 250, thereby further causes the hook body 230, together with the hook mechanism 236, to be urged in an axial direction (*i.e.,* the Y-direction) with respect to the first pin 246, which remains stationary with respect to the cowl panel to which the latch mechanism 220 is connected (*e.g.*, the second core cowl panel 110). Once the hook mechanism 236 or the hook 238 is decoupled from the mating pin 240, the first core cowl panel 108 and the second core cowl panel 110 may be decoupled. Coupling the first core cowl panel 108 and the second core cowl panel 110 is accomplished by reversing the operational steps above described.

In various embodiments, the coupling and decoupling of the latch mechanism 220 to the mating pin 240 may be adjusted by adjusting the location of the hook 238 with respect to the hook body 230 using an adjustment mechanism 254 that comprises, for example, an adjustment nut 256 threadedly coupled to a shaft 258 that is connected to the hook 238. Rotating the adjustment nut 256 in a first direction, for example, increases the distance (or axial position) between the hook 238 and the hook body 230, while rotating the adjustment nut 256 in a second direction decreases the distance (or axial position) between the hook 238 and the hook body 230. In various embodiments, a bearing block 255 is positioned between the adjustment nut 256 and a hook body load bearing plate 257 of the hook body 230, while a bias element 259 (*e.g.,* a wave spring) is disposed aft of the adjustment nut 256 and configured to bias the adjustment nut 256 toward the bearing block 255 and the hook body load bearing plate 257 when the latch mechanism 220 assumes a decoupled or an unloaded state.

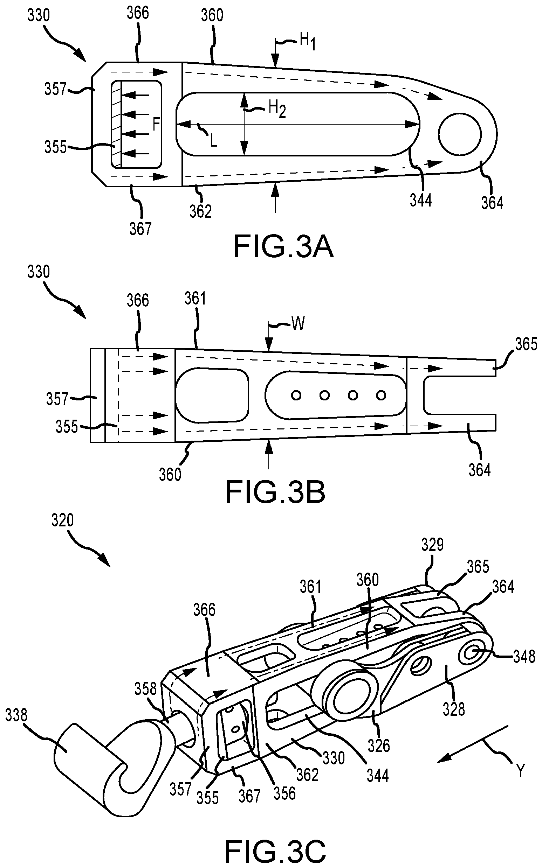

Referring now to FIGS. 3A, 3B and 3C, various schematic views of a latch mechanism 320, or components thereof, similar to the latch mechanism 220 above described, are provided in accordance with the invention. Referring to FIGS. 3A and 3B, for example, a side view and an overhead view, respectively, of a hook body 330, similar to the hook body 230 described above, are provided, while a perspective view of various components of the latch mechanism 320, including the hook body 330, is provided in FIG. 3C. Referring more specifically to the hook body 330, the hook body includes a first upper longitudinal beam 360 and a first lower longitudinal beam 362 and a second upper longitudinal beam 361 and a second lower longitudinal beam (hidden) (or a plurality of longitudinal members). By longitudinal, the disclosure contemplates the various beams being parallel with a longitudinal direction Y (*e.g*., the Y-direction shown in FIG. 2) or, as in the claimed embodiment, within a deviation ranging between about zero degrees (0°) and about twenty (20°) from being parallel to the longitudinal direction (e.g., the deviation being in the Z or X directions shown in FIG. 2). The first upper longitudinal beam 360 and the first lower longitudinal beam 362 are connected to a first aft flange 364, while the second upper longitudinal beam 361 and the second lower longitudinal beam are connected to a second aft flange 365. The first aft flange 364 and the second aft flange 365 are coupled to a first aft link 328 and a second aft link 329, respectively, via an aft pin 348, similar to the second pin 248 (or aft pin) described above, which is also coupled to a latch handle, similar to the latch handle 222 described above. Note that by reference to "longitudinal beam," the disclosure contemplates the various longitudinal beams being substantially straight and running parallel with respect to the longitudinal direction or within a deviation ranging between about zero degrees (0°) and about twenty (20°) from running parallel to the longitudinal direction.

In similar fashion, the first upper longitudinal beam 360 and the second upper longitudinal beam 361 are connected to a forward upper plate 366, while the first lower longitudinal beam 362 and the second lower longitudinal beam are connected to a forward lower plate 367. The forward upper plate 366 and the forward lower plate 367 are connected to a hook body load bearing plate 357, similar to the hook body load bearing plate 257 described above. In various embodiments, the forward upper plate 366 lies or is disposed within an upper plane that is substantially perpendicular to the hook body load bearing plate 357 and extends in the longitudinal direction away from the load bearing plate (*i.e.,* toward an aft direction). Similarly, the forward lower plate 367 lies or is disposed within a lower plane that is substantially perpendicular to the hook body load bearing plate 357 and extends in the longitudinal direction away from the load bearing plate (*i.e.,* toward the aft direction). Also similar to the description above, the latch mechanism 320 includes an adjustment nut 356 threadedly engaged with a shaft 358 that is connected to a hook 338. A bearing block 355 is positioned between the adjustment nut 356 and the hook body load bearing plate 357. In various embodiments, the bearing block 355 receives the axial load placed on the adjustment nut 356 when the latch mechanism 320 assumes a deployed or a loaded state and distributes the load throughout the hook body load bearing plate 357. As described further below, the distributed load is then transferred via the longitudinal beams to the first aft flange 364 and to the second aft flange 365 and ultimately to the aft pin 348 via an efficient load transfer design of the hook body 330.

Still referring to FIGS. 3A-3C, the load paths resulting from a load placed on the latch mechanism 320 are illustrated. When an axial load (a tensile load) is placed on the shaft 358, a compressive load F is translated through the bearing block 355 and into the hook body load bearing plate 357. The compressive load on the hook body load bearing plate 357 is then translated into tensile loads that are distributed throughout the various structural components of the hook body 330. As illustrated by the dashed arrows, for example, the tensile load is distributed and translated through the forward upper plate 366 and the forward lower plate 367 and then through, respectively, the first upper longitudinal beam 360 and the second upper longitudinal beam 361 and the first lower longitudinal beam 362 and the second lower longitudinal beam. The tensile load is then distributed and translated through the first aft flange 364 and to the second aft flange 365 and ultimately to the aft pin 348.

As illustrated, the tensile load distributed and translated throughout the hook body 330 occurs without experiencing local stress concentrations, due primarily to the box-like structure of the hook body 330. More specifically, each of the first upper longitudinal beam 360, the second upper longitudinal beam 361, the first lower longitudinal beam 362 and the second lower longitudinal beam are oriented essentially in the axial direction, from the forward upper plate 366 and the forward lower plate 367 to the first aft flange 364 and to the second aft flange 365. In other words, the hook body 330 does not exhibit any elements within the structure where the load paths deviate substantially from the axial direction. In various embodiments, the box-like structure that results in the efficient load path described above is a result of the hook body 330 having a constant or essentially constant height H₁ (or hook body height) and a constant or essentially constant width W (or hook body width), both of which are essentially orthogonal to the axial load paths extending through the various structural elements above described. Further, an axial cutout 344, similar to the axial cutout 244 described above with reference to FIG. 2, also exhibits an essentially longitudinal or axial configuration. As illustrated in FIG. 3A, for example, the axial cutout 344 exhibits a constant or essentially constant height H₂ (or axial cutout height) along an axial length L of the axial cutout 344. Note that a first axial cutout resides between the first upper longitudinal beam 360 and the first lower longitudinal beam 362 (similar to the axial cutout 344) and a second axial cutout resides between the second upper longitudinal beam 361 and the second lower longitudinal beam (similar to the axial cutout 344).

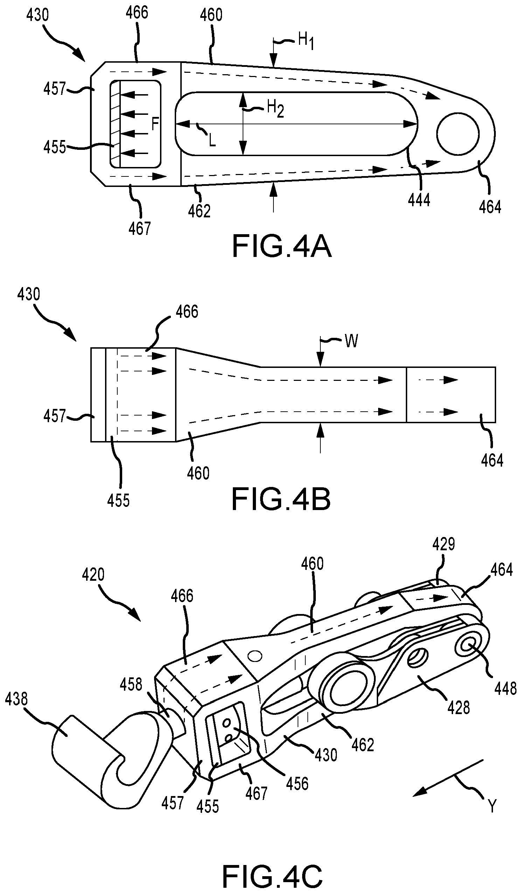

Referring now to FIGS. 4A, 4B and 4C, various schematic views of a latch mechanism 420, or components thereof, similar to the latch mechanism 220 and the latch mechanism 320 above described, but falling outside the wording of the claims, are provided. Referring to FIGS. 4A and 4B, for example, a side view and an overhead view, respectively, of a hook body 430, similar to the hook body 230 and the hook body 330 described above, are provided, while a perspective view of various components of the latch mechanism 420, including the hook body 430, is provided in FIG. 4C. Referring more specifically to the hook body 430, the hook body includes an upper longitudinal beam 460 and a lower longitudinal beam 462 (or a plurality of longitudinal members). The upper longitudinal beam 460 and the lower longitudinal beam 462 are connected to an aft flange 464. The aft flange 464 is coupled to a first aft link 428 and a second aft link 429 via an aft pin 448, similar to the second pin 248 (or aft pin) described above, which is also coupled to a latch handle, similar to the latch handle 222 described above. Similar to the above description, the disclosure contemplates the various beams being parallel with a longitudinal direction Y (e.g., the Y-direction shown in FIG. 2) or within a deviation ranging between about zero degrees (0°) and about twenty (20°) from being parallel to the longitudinal direction (e.g., the deviation being in the Z or X directions shown in FIG. 2). Further, by reference to "longitudinal beam," the disclosure contemplates the various longitudinal beams being substantially straight and running parallel with respect to a longitudinal direction or within a deviation ranging between about zero degrees (0°) and about twenty (20°) from running parallel to the longitudinal direction.

In similar fashion, the upper longitudinal beam 460 is connected to a forward upper plate 466, while the lower longitudinal beam 462 is connected to a forward lower plate 467. The forward upper plate 466 and the forward lower plate 467 are connected to a hook body load bearing plate 457, similar to the hook body load bearing plate 257 and to the hook body load bearing plate 357 described above. In various embodiments, the forward upper plate 466 lies or is disposed within an upper plane that is substantially perpendicular to the hook body load bearing plate 457 and extends in the longitudinal direction away from the load bearing plate (*i.e.,* toward an aft direction). Similarly, the forward lower plate 467 lies or is disposed within a lower plane that is substantially perpendicular to the hook body load bearing plate 457 and extends in the longitudinal direction away from the load bearing plate (*i.e.,* toward the aft direction). Also similar to the description above, the latch mechanism 420 includes an adjustment nut 456 threadedly engaged with a shaft 458 that is connected to a hook 438. A bearing block 455 is positioned between the adjustment nut 456 and the hook body load bearing plate 457. In various embodiments, the bearing block 455 receives the axial load placed on the adjustment nut 456 when the latch mechanism 420 assumes a deployed or a loaded state and distributes the load throughout the hook body load bearing plate 457. As described further below, the distributed load is then transferred via the longitudinal beams to the aft flange 464 and ultimately to the aft pin 448 via an efficient load transfer design of the hook body 430.

Still referring to FIGS. 4A, 4B and 4C, the load paths resulting from a load placed on the latch mechanism 420 are illustrated. When an axial load (a tensile load) is placed on the shaft 458, a compressive load F (e.g., as illustrated in FIG. 4A) is translated through the bearing block 455 and into the hook body load bearing plate 457. The compressive load on the hook body load bearing plate 457 is then translated into tensile loads that are distributed throughout the various structural components of the hook body 430. As illustrated by the dashed arrows, for example, the tensile load is distributed and translated through the forward upper plate 466 and the forward lower plate 467 and then through, respectively, the upper longitudinal beam 460 and the lower longitudinal beam 462. The tensile load is then distributed and translated through the aft flange 464 and ultimately to the aft pin 448.

As illustrated, the tensile load distributed and translated throughout the hook body 430 occurs without experiencing local stress concentrations, due primarily to the box-like structure of the hook body 430. More specifically, each of the upper longitudinal beam 460 and the lower longitudinal beam 462 are oriented essentially in the axial direction, from the forward upper plate 466 and the forward lower plate 467 to the aft flange 464. In other words, the hook body 430 does not exhibit any elements within the structure where the load paths deviate substantially from the axial direction. In various embodiments, the box-like structure that results in the efficient load path described above is a result of the hook body 430 having a constant or essentially constant height H₁ (or hook body height) and a constant or essentially constant width W (or hook body width), both of which are essentially orthogonal to the axial load paths extending through the various structural elements above described. Further, an axial cutout 444, similar to the axial cutout 244 and the axial cutout 344 described above, also exhibits an essentially longitudinal or axial configuration. As illustrated in FIG. 4A, for example, the axial cutout 444 exhibits a constant or essentially constant height H₂ (or axial cutout height) along an axial length L of the axial cutout 444.

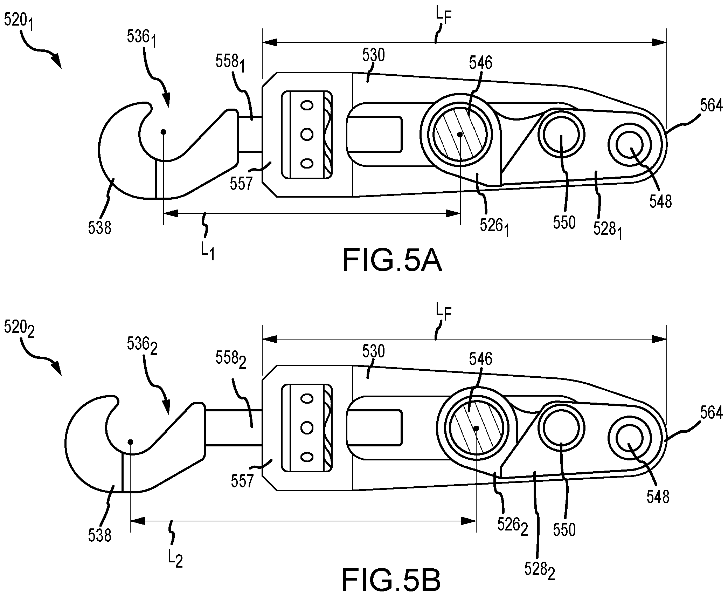

Referring now to FIGS. 5A and 5B, a first latch mechanism 520₁ and a second latch mechanism 520₂, similar to the latch mechanism 220, the latch mechanism 320 or the latch mechanism 420 described above with reference to FIG. 2, FIGS. 3A-3C or FIGS. 4A-4C, are illustrated. Each of the first latch mechanism 520₁ and the second latch mechanism 520₂ includes a hook body 530 having similar structural elements and characteristics as the hook body 330 and the hook body 430 described above, so those elements and characteristics are not repeated here. Due to the design and axial construction of the hook body 530, as described above, an additional benefit of the disclosure is the ability to change a functional length of the latch mechanisms without having to change the length or design of the hook body 530 and, in particular, without having to change a hook body length, L_{F}, of the hook body 530, where the hook body length L_{F} extends from a forward portion of a hook body load bearing plate 557 to an aft flange 564 (or one of a first aft flange or a second aft flange as described above).

For example, as illustrated in FIG. 5A, the first latch mechanism 520₁ includes a first hook mechanism 536₁, a first forward link 526₁ and a first aft link 528₁. The first hook mechanism includes a hook 538 that is attached to a first shaft 558₁ and the first forward link 526₁ is connected to a first pin 546 (or a forward pin), similar to the first pin 546 (or the forward pin) described above with reference to FIG. 2. So configured, the first latch mechanism 520₁ exhibits a first functional length L₁ that extends between the center of the hook 538 and the center of the first pin 546. Note the first aft link 528₁ is connected to a second pin 548, similar to the second pin 248 described above, and both the first forward link 526₁ and the first aft link 528₁ are pivotally connected to a third pin 550, similar to the third pin 250 described above. Referring now to FIG. 5B, the second latch mechanism 520₂ exhibits a second functional length L₂ that extends between the center of a hook 538 that is attached to a second shaft 558₂ and the center of the first pin 546. The increase of the second functional length L₂ over the first functional length L₁ is accomplished by increasing the length of the second shaft 558₂ over the first shaft 558₁ or by decreasing the length of the second forward link 526₂, such that a distance between the first pin 546 and the third pin 550 is reduced, with the second pin 548 and the third pin 550 being located at the same position for both the first latch mechanism 520₁ and the second latch mechanism 520₂.

The foregoing disclosure provides a hook body and a latch mechanism that constrains the loads experienced by the hook body to lie primarily in a longitudinal direction, thereby preventing or reducing various moments or torques that might otherwise occur when loading the latch mechanism. Reducing the moments or torques enables the loads experienced by the various components to be confined to pure axial loads, typically in tension, when the latch mechanism is in a deployed state. A bearing block and, in particular, a block load bearing plate, may be incorporated into the hook body or mechanism to distribute the loads placed on it throughout the hook body load bearing plate, thus enabling the loads to be evenly distributed throughout the longitudinal beams, with the loads being primarily tensile loads without moments or torques placed on the beams. The load distribution facilitates smaller, lighter and more compact hook bodies to be incorporated into a latch mechanism. In addition, the disclosure provides for an adjustable latch mechanism, whereby a functional length may be increased or decreased by swapping one or both of the hook mechanism or the latch linkage with components having or accommodating different lengths to thereby affect latch mechanisms exhibiting different functional lengths while using a common hook body. Note that while the foregoing disclosure describes a hook body comprising a plurality of elements, such as, for example, longitudinal beams, aft flanges, upper and lower plate members and load bearing plates, the disclosure contemplates embodiments where each of the various elements is incorporated into a single-piece, monolithic component when fabricated. Further, the disclosure contemplates embodiments where the longitudinal beams include the plate members as well as the aft flanges into single-piece, monolithic longitudinal members. In other words, the term longitudinal member may be construed to include each (or one or more of) of a plate, a longitudinal beam and an aft flange.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Although various embodiments have been disclosed and described, one of ordinary skill in this art would recognize that certain modifications would come within the scope of the claims. Accordingly, the description is not intended to be exhaustive or to limit the principles described or illustrated herein to any precise form. Many modifications and variations are possible in light of the above teaching and within the scope of the claims.

## Claims

1. A hook body (230; 330; 430; 530) for a latch mechanism (220; 320; 420; 520₁; 520₂), comprising:
a plurality of longitudinal members (360, 361, 362; 460, 462), each of the plurality of longitudinal members (360, 361, 362; 460, 462) extending in a longitudinal direction with respect to the hook body (230; 330; 430; 530), the plurality of longitudinal members (360, 361, 362; 460, 462) including a first upper longitudinal beam (360; 460) and a second upper longitudinal beam (361), the first upper longitudinal beam (360; 460) and the second upper longitudinal beam (361) having between about zero degrees to about twenty degrees deviation from parallel in the longitudinal direction; and
a hook body load bearing plate (257; 357; 457; 557) connected to the plurality of longitudinal members (230; 330; 430; 530) and being oriented perpendicular to the longitudinal direction, the hook body load bearing plate (257; 357; 457; 557) configured to slidably receive a shaft (258; 358; 458; 558₁; 558₂) connected to a hook (238; 338; 438; 538), the shaft (258; 358; 458; 558₁; 558₂) extending in use in the longitudinal direction with respect to the hook body (230; 330; 430; 530),
**characterized in that** the hook body (230; 330; 430; 530) further comprises:
a first aft flange (364; 464) and a second aft flange (365), wherein the first upper longitudinal beam (360; 460) is connected to the first aft flange (364; 464) and the second upper longitudinal beam (361) is connected to the second aft flange (365).

2. The hook body (230; 330; 530) of claim 1, wherein the plurality of longitudinal members (360, 361, 362) includes a first lower longitudinal beam (362), the first lower longitudinal beam (362) connected to the first aft flange (364).

3. The hook body (230; 330; 530) of claim 2, wherein the plurality of longitudinal members (360, 361, 362) includes a second lower longitudinal beam, the second lower longitudinal beam connected to the second aft flange (365).

4. The hook body (230; 330; 530) of claim 3, wherein a forward lower plate (367) is positioned between and connects the first lower longitudinal beam (362) and the second lower longitudinal beam to the hook body load bearing plate (257; 357; 557).

5. The hook body (230; 330; 530) of claim 4, wherein the forward lower plate (367) extends in the longitudinal direction and lies in a lower plane that is orthogonal to the hook body load bearing plate (257; 357; 557).

6. The hook body (230; 330; 530) of any preceding claim, wherein a forward upper plate (366) is positioned between and connects the first upper longitudinal beam (360) and the second upper longitudinal beam (361) to the hook body load bearing plate (257; 357; 557).

7. The hook body (230; 330; 530) of claim 6, wherein the forward upper plate (366) extends in the longitudinal direction and lies in an upper plane that is orthogonal to the hook body load bearing plate (257; 357; 557).

8. The hook body (230; 330; 430; 530) of claim 1, wherein the plurality of longitudinal members (360, 361, 362; 460, 462) includes a first lower longitudinal beam (362; 462) connected to the first aft flange (364; 464), the first upper longitudinal beams (360, 361; 460) and the lower longitudinal beam (362; 462) defining an axial cutout (244; 344; 444) extending longitudinally between the hook body load bearing plate (257; 357; 457; 557) and the aft flange (364; 464).

9. The hook body (230; 330; 430; 530) of claim 8, wherein a forward upper plate (366; 466) is positioned between and connects the upper longitudinal beam (360, 361; 460) to the hook body load bearing plate (257; 357; 457; 557) and a forward lower plate (367; 467) is positioned between and connects the lower longitudinal beam (362; 462) to the hook body load bearing plate (257; 357; 457; 557).

10. The hook body (230; 330; 430; 540) of claim 9, wherein the axial cutout (244; 344; 444) is configured to receive a pin (246), and enable the hook body (230; 330; 430; 530) to slide in the longitudinal direction with respect to the pin (246).

11. A latch mechanism (220; 320; 420; 520₁; 520₂), comprising:
the hook body (230; 330; 430; 530) of any preceding claim; and
a hook mechanism (236; 536₁; 536₂), the hook mechanism (236; 536₁; 536₂) having a hook (238; 338; 438; 538) and a shaft (258; 358; 458; 558₁; 558₂) connected to the hook (238; 338; 438; 538), the shaft (258; 358; 458; 558₁; 558₂) extending in the longitudinal direction with respect to the hook body (230; 330; 430; 530).

12. The latch mechanism (220; 320; 420; 520₁; 520₂) of claim 11, wherein the second upper longitudinal beam (361) and a or the second lower longitudinal beam connected to the second aft flange (365) define a second axial cutout extending longitudinally between the hook body load bearing plate (257; 357; 557) and the second aft flange (365).

## Patentansprüche

1. Hakenkörper (230; 330; 430; 530) für einen Verschlussmechanismus (220; 320; 420; 520₁; 520₂), umfassend:
eine Vielzahl von Längselementen (360, 361, 362; 460, 462), wobei sich jedes der Vielzahl von Längselementen (360, 361, 362; 460, 462) in einer Längsrichtung in Bezug auf den Hakenkörper (230; 330; 430; 530) erstreckt, wobei die Vielzahl von Längselementen (360, 361, 362; 460, 462) einen ersten oberen Längsträger (360; 460) und einen zweiten oberen Längsträger (361) umfasst, wobei der erste obere Längsträger (360; 460) und der zweite obere Längsträger (361) eine Abweichung von der Parallelen in der Längsrichtung zwischen etwa null Grad und etwa zwanzig Grad aufweisen; und
eine Lastaufnahmeplatte (257; 357; 457; 557) des Hakenkörpers, die mit der Vielzahl von Längselementen (230; 330; 430; 530) verbunden ist und senkrecht zu der Längsrichtung ausgerichtet ist, wobei die Lastaufnahmeplatte (257; 357; 457; 557) des Hakenkörpers zum gleitenden Aufnehmen einer mit einem Haken (238; 338; 438; 538) verbundenen Spindel (258; 358; 458; 558₁; 558₂) ausgelegt ist, wobei sich die Spindel (258; 358; 458; 558₁; 558₂) bei Verwendung in Längsrichtung in Bezug auf den Hakenkörper (230; 330; 430; 530) erstreckt,
**dadurch gekennzeichnet, dass** der Hakenkörper (230; 330; 430; 530) ferner Folgendes umfasst:
einen ersten hinteren Flansch (364; 464) und einen zweiten hinteren Flansch (365), wobei der erste obere Längsträger (360; 460) mit dem ersten hinteren Flansch (364; 464) verbunden ist und der zweite obere Längsträger (361) mit dem zweiten hinteren Flansch (365) verbunden ist.

2. Hakenkörper (230; 330; 530) nach Anspruch 1, wobei die Vielzahl von Längselementen (360, 361, 362) einen ersten unteren Längsträger (362) beinhaltet, wobei der erste untere Längsträger (362) mit dem ersten hinteren Flansch (364) verbunden ist.

3. Hakenkörper (230; 330; 530) nach Anspruch 2, wobei die Vielzahl von Längselementen (360, 361, 362) einen zweiten unteren Längsträger beinhaltet, wobei der zweite untere Längsträger mit dem zweiten hinteren Flansch (365) verbunden ist.

4. Hakenkörper (230; 330; 530) nach Anspruch 3, wobei eine vordere untere Platte (367) zwischen dem ersten unteren Längsträger (362) und dem zweiten unteren Längsträger positioniert ist und diese mit der Lastaufnahmeplatte (257; 357; 557) des Hakenkörpers verbindet.

5. Hakenkörper (230; 330; 530) nach Anspruch 4, wobei sich die vordere untere Platte (367) in Längsrichtung erstreckt und in einer unteren Ebene liegt, die orthogonal zu der Lastaufnahmeplatte (257; 357; 557) des Hakenkörpers verläuft.

6. Hakenkörper (230; 330; 530) nach einem der vorhergehenden Ansprüche, wobei eine vordere obere Platte (366) zwischen dem ersten oberen Längsträger (360) und dem zweiten oberen Längsträger (361) positioniert ist und diese mit der Lastaufnahmeplatte (257; 357; 557) des Hakenkörpers verbindet.

7. Hakenkörper (230; 330; 530) nach Anspruch 6, wobei sich die vordere obere Platte (366) in Längsrichtung erstreckt und in einer oberen Ebene liegt, die orthogonal zu der Lastaufnahmeplatte (257; 357; 557) des Hakenkörpers verläuft.

8. Hakenkörper (230; 330; 430; 530) nach Anspruch 1, wobei die Vielzahl von Längselementen (360, 361, 362; 460, 462) einen mit dem ersten hinteren Flansch (364; 464) verbundenen ersten unteren Längsträger (362; 462) beinhaltet, wobei die ersten oberen Längsträger (360, 361; 460) und der untere Längsträger (362; 462) einen axialen Ausschnitt (244; 344; 444) definieren, der sich in Längsrichtung zwischen der Lastaufnahmeplatte (257; 357; 457; 557) des Hakenkörpers und dem hinteren Flansch (364; 464) erstreckt.

9. Hakenkörper (230; 330; 430; 530) nach Anspruch 8, wobei eine vordere obere Platte (366; 466) zwischen dem oberen Längsträger (360, 361; 460) positioniert ist und diesen mit der Lastaufnahmeplatte (257; 357; 457; 557) des Hakenkörpers verbindet und eine vordere untere Platte (367; 467) zwischen dem unteren Längsträger (362; 462) positioniert ist und diesen mit der Lastaufnahmeplatte (257; 357; 457; 557) des Hakenkörpers verbindet.

10. Hakenkörper (230; 330; 430; 540) nach Anspruch 9, wobei der axiale Ausschnitt (244; 344; 444) zum Aufnehmen eines Stiftes (246) und Ermöglichen eines Gleitens des Hakenkörpers (230; 330; 430; 530) in Längsrichtung in Bezug auf den Stift (246) ausgelegt ist.

11. Verschlussmechanismus (220; 320; 420; 520₁; 520₂), umfassend:
den Hakenkörper (230; 330; 430; 530) nach einem der vorhergehenden Ansprüche; und
einen Hakenmechanismus (236; 536₁; 536₂), wobei der Hakenmechanismus (236; 536₁; 536₂) einen Haken (238; 338; 438; 538) und eine mit dem Haken (238; 338; 438; 538) verbundene Spindel (258; 358; 458; 558₁; 558₂) aufweist, wobei sich die Spindel (258; 358; 458; 558₁; 558₂) in Längsrichtung in Bezug auf den Hakenkörper (230; 330; 430; 530) erstreckt.

12. Verschlussmechanismus (220; 320; 420; 520₁; 520₂) nach Anspruch 11, wobei der zweite obere Längsträger (361) und ein oder der mit dem zweiten hinteren Flansch (365) verbundene(r) zweite(r) untere(r) Längsträger einen zweiten axialen Ausschnitt definieren, der sich in Längsrichtung zwischen der Lastaufnahmeplatte (257; 357; 557) des Hakenkörpers und dem zweiten hinteren Flansch (365) erstreckt.

## Revendications

1. Corps de crochet (230 ; 330 ; 430 ; 530) pour un mécanisme de verrou (220 ; 320 ; 420 ; 520₁ ; 520₂), comprenant :
une pluralité d'éléments longitudinaux (360, 361, 362 ; 460, 462), chacun de la pluralité d'éléments longitudinaux (360, 361, 362 ; 460, 462) s'étendant dans une direction longitudinale par rapport au corps de crochet (230 ; 330 ; 430 ; 530), la pluralité d'éléments longitudinaux (360, 361, 362 ; 460, 462) comprenant une première poutre longitudinale supérieure (360 ; 460) et une seconde poutre longitudinale supérieure (361), la première poutre longitudinale supérieure (360 ; 460) et la seconde poutre longitudinale supérieure (361) présentant un écart compris entre environ zéro degré et environ vingt degrés par rapport à la parallèle dans la direction longitudinale ; et une plaque de support de charge de corps de crochet (257 ; 357 ; 457 ; 557) reliée à la pluralité d'éléments longitudinaux (230 ; 330 ; 430 ; 530) et étant orientée perpendiculairement à la direction longitudinale, la plaque de support de charge de corps de crochet (257 ; 357 ; 457 ; 557) étant configurée pour recevoir de manière coulissante un arbre (258 ; 358 ; 458 ; 558₁ ; 558₂) relié à un crochet (238 ; 338 ; 438 ; 538), l'arbre (258 ; 358 ; 458 ; 558₁ ; 558₂) s'étendant lors de l'utilisation dans la direction longitudinale par rapport au corps de crochet (230 ; 330 ; 430 ; 530),
**caractérisé en ce que** le corps de crochet (230 ; 330 ; 430 ; 530) comprend également :
une première bride arrière (364 ; 464) et une seconde bride arrière (365), dans lequel la première poutre longitudinale supérieure (360 ; 460) est reliée à la première bride arrière (364 ; 464) et la seconde poutre longitudinale supérieure (361) est reliée à la seconde bride arrière (365).

2. Corps de crochet (230 ; 330 ; 530) selon la revendication 1, dans lequel la pluralité d'éléments longitudinaux (360, 361, 362) comprend une première poutre longitudinale inférieure (362), la première poutre longitudinale inférieure (362) étant reliée à la première bride arrière (364).

3. Corps de crochet (230 ; 330 ; 530) selon la revendication 2, dans lequel la pluralité d'éléments longitudinaux (360, 361, 362) comprend une seconde poutre longitudinale inférieure, la seconde poutre longitudinale inférieure étant reliée à la seconde bride arrière (365).

4. Corps de crochet (230 ; 330 ; 530) selon la revendication 3, dans lequel une plaque inférieure avant (367) est positionnée entre la première poutre longitudinale inférieure (362) et la seconde poutre longitudinale inférieure, et les relie à la plaque de support de charge de corps de crochet (257 ; 357 ; 557).

5. Corps de crochet (230 ; 330 ; 530) selon la revendication 4, dans lequel la plaque inférieure avant (367) s'étend dans la direction longitudinale et se trouve dans un plan inférieur qui est orthogonal à la plaque de support de charge de corps de crochet (257 ; 357 ; 557).

6. Corps de crochet (230 ; 330 ; 530) selon une quelconque revendication précédente, dans lequel une plaque supérieure avant (366) est positionnée entre la première poutre longitudinale supérieure (360) et la seconde poutre longitudinale supérieure (361), et les relie à la plaque de support de charge de corps de crochet (257 ; 357 ; 557).

7. Corps de crochet (230 ; 330 ; 530) selon la revendication 6, dans lequel la plaque supérieure avant (366) s'étend dans la direction longitudinale et se trouve dans un plan supérieur qui est orthogonal à la plaque de support de charge de corps de crochet (257 ; 357 ; 557).

8. Corps de crochet (230 ; 330 ; 430 ; 530) selon la revendication 1, dans lequel la pluralité d'éléments longitudinaux (360, 361, 362 ; 460, 462) comprend une première poutre longitudinale inférieure (362 ; 462) reliée à la première bride arrière (364 ; 464), les premières poutres longitudinales supérieures (360, 361 ; 460) et la poutre longitudinale inférieure (362 ; 462) définissant une découpe axiale (244 ; 344 ; 444) s'étendant longitudinalement entre la plaque de support de charge de corps de crochet (257 ; 357 ; 457 ; 557) et la bride arrière (364 ; 464).

9. Corps de crochet (230 ; 330 ; 430 ; 530) selon la revendication 8, dans lequel une plaque supérieure avant (366 ; 466) est positionnée entre la poutre longitudinale supérieure (360, 361 ; 460) et la plaque de support de charge de corps de crochet (257 ; 357 ; 457 ; 557), et les relie, et une plaque inférieure avant (367 ; 467) est positionnée entre la poutre longitudinale inférieure (362 ; 462) et la plaque de support de charge de corps de crochet (257 ; 357 ; 457 ; 557), et les relie.

10. Corps de crochet (230 ; 330 ; 430 ; 540) selon la revendication 9, dans lequel la découpe axiale (244 ; 344 ; 444) est configurée pour recevoir une broche (246) et permettre au corps de crochet (230 ; 330 ; 430 ; 530) de coulisser dans la direction longitudinale par rapport à la broche (246).

11. Mécanisme de verrou (220 ; 320 ; 420 ; 520₁; 520₂), comprenant :
le corps de crochet (230 ; 330 ; 430 ; 530) selon une quelconque revendication précédente ; et
un mécanisme de crochet (236 ; 536₁ ; 536₂), le mécanisme de crochet (236 ; 536₁ ; 536₂) comportant un crochet (238 ; 338 ; 438 ; 538) et un arbre (258 ; 358 ; 458 ; 558₁ ; 558₂) relié au crochet (238 ; 338 ; 438 ; 538), l'arbre (258 ; 358 ; 458 ; 558₁ ; 558₂) s'étendant dans la direction longitudinale par rapport au corps de crochet (230 ; 330 ; 430 ; 530).

12. Mécanisme de verrou (220 ; 320 ; 420 ; 520₁ ; 520₂) selon la revendication 11, dans lequel la seconde poutre longitudinale supérieure (361) et une ou la seconde poutre longitudinale inférieure reliée à la seconde bride arrière (365) définissent une seconde découpe axiale s'étendant longitudinalement entre la plaque de support de charge de corps de crochet (257 ; 357 ; 557) et la seconde bride arrière (365).
